# EUROPEAN PATENT APPLICATION

(11) **EP 4 473 881 A1**
(43) Date of publication of application: **11.12.2024**
(21) Application number: 24180755.1
(22) Date of filing: 07.06.2024
(51) Int. Cl.: A47J 43/08

(54) **MIXING APPLIANCE AND METHOD OF OPERATING**

(30) Priority: 08.06.2023 US 202363471865 P; 05.06.2024 US 202418734498
(71) Applicant: Whirlpool Corporation, Benton Harbor, MI 49022 (US)
(72) Inventor: BRADLEY, Samuel J., Benton Harbor MI 49022 (US); SHEWALE, Pravin R., Benton Harbor MI 49022 (US); LEITERT, Andrew, Benton Harbor MI 49022 (US)
(74) Representative: PGA S.p.A., Milano, Succursale di Lugano

(57) **Abstract**

A mixing appliance (11) includes a motor (50) having a rotatable drive shaft (51) coupled to a gearbox (40) having a rotatable output shaft (143). The gearbox (40) includes a first gear train (141) having a first output speed ratio and a second gear train (142) having a second output speed ratio. A controller module (30) is communicatively coupled to an actuator (125) arranged to selectively trigger a shifter member (130) to shift an engagement of the first gear train (141) or the second gear train (142) to the other of the first or second gear train (141, 142).

## Description

### TECHNICAL FIELD

The present disclosure relates to electrical mixing appliances for processing food items.

### BACKGROUND

Electrical appliances such as a mixing appliance for processing or mixing food items can take many forms, such as blenders, food processors, mixers, and the like. Such appliances typically include a drive assembly including an electric motor and a gearbox located in a housing. The drive assembly is arranged to rotate, at a desired speed, an output shaft coupled to a work piece such as a blade, paddle, or other implement. The work piece is selected to perform particular operations such as blending, mixing, beating, whipping, stirring, kneading, chopping and the like, on a food item or ingredient.

### BRIEF SUMMARY

In accordance with one aspect, the present disclosure relates to an electric mixing appliance. The mixing appliance has a housing, a motor located in the housing with a rotatable drive shaft. The mixing appliance also has a gearbox located in the housing with an input side and an output side. The gearbox includes a rotatable output shaft. The rotatable output shaft is axially aligned with and rotatably coupled to the rotatable drive shaft at the input side. The gearbox includes a first gear train having a first output speed ratio and a second gear train having a second output speed ratio and a shifter member moveably coupled to an input gear. The shifter member is selectively moveable between a first shifter position and a second shifter position, wherein, in response to a first movement of the shifter member to the first shifter position, the input gear is moveable in a first direction to be disengaged from a second gear, and a first gear is moveable in the first direction to be disengaged from a third gear, to define the first gear train of the gearbox. Also, wherein in response to a second movement of the shifter member to the second shifter position, the input gear is moveable in a second direction to be in rotatable engagement with the second gear, and the first gear is moveable in the second direction to be in rotatable engagement with the third gear to define the second gear train of the gearbox.

### DESCRIPTION OF DRAWINGS

In the drawings:
FIG. 1A depicts a perspective view of an electrical mixing appliance in accordance with various aspects as described herein;
FIG. 1B illustrates a perspective view of a portion of the mixing appliance of FIG. 1A, in accordance with various aspects described herein;
FIG. 2 is a schematic diagram of the mixing appliance of FIG. 1A in accordance with various aspects as described herein;
FIG. 3 is a perspective view of a gearbox and rotatable drive shaft usable with the mixing appliance of FIG. 1, in accordance with various aspects described herein;
FIG. 4 is a cross-section view of the gearbox and rotatable drive shaft of FIG. 3, with a first gear train engaged, in accordance with various aspects as described herein;
FIG. 5 is a cross-section view of the gearbox and rotatable drive shaft of FIG. 3, with a second gear train engaged, in accordance with various aspects as described herein;
FIG. 6 is a flowchart diagram illustrating a method of operating a mixing appliance in accordance with various aspects as described herein.

### DETAILED DESCRIPTION

Conventional mixing appliances such as blenders, mixers, food processors, kneading machines, and the like, typically use an electric motor to rotate a spindle or shaft coupled to a tool, such as a blade, whisk, beater, or other mixing implement. One or more ingredients orfood items are placed in a vessel, and the rotating tool is brought into engagement with the ingredients in the vessel to perform the desired mixing operation. During operation of the mixing appliance, a condition of the food item, such as the consistency, viscosity, degree of mixing, and the like, typically changes, and it may be desirable to then continue operation of the electrical appliance with a different speed of the output shaft based on the changed condition. Accordingly, such mixing appliances often include an electronic variable speed control to adjust a rotational speed of the motor, and thereby adjust the speed of the shaft. In other instances, for example, when the motor is a single-speed type, a gearbox can be used to enable a user to adjust the rotational speed of the output shaft depending on the desired action.

It will be appreciated that various ingredients will have vastly differing respective viscosities or densities which can necessitate use of different torques or rotational speeds of the tool to accomplish the desired mixing operation. For at least this reason, mixing appliances can be operated at more than one speed. In some cases, an electronic speed control can be used to control the speed of the motor. In other arrangements, a gearbox is used to provide selectable output speeds and torques for the tool. However, such conventional gearboxes can be complicated, requiring many moving parts such as multiple gears and a clutch. Additionally, conventional mixing devices often rely on the user to determine when to change the rotational speed based on the observed state of the food item or a time duration of the mixing operation, and to manually shift or change between gears in the gearbox to achieve a desired rotational speed. This can be challenging particularly in cases of less experienced users. Additionally, in some cases, the desired mixing operation can be time consuming, and require the user's prolonged attention to determine when to change gears of rotational speeds.

Aspects as disclosed herein can provide a multiple speed mixing device, having a simple, relatively low-cost gearbox that can be manually or automatically shifted between two gear trains having respective rotational output speed ratios, without need of a clutching operation. More specifically, aspects as disclosed herein can provide a mixing appliance having multiple selectable speeds or torques for an output shaft rotatably coupled to a gearbox. For example, a first gear train can be engaged to rotate the output shaft at a first rotational speed for a first duration. Aspects can further determine a need for operation at a second rotational speed of the output shaft, and can automatically trigger a shift of the gearbox to engage a second gear train to rotate the output shaft at a second rotational speed for a second duration. The first and second rotational speeds and first and second durations can be predetermined. In some aspects first and second rotational speeds and first and second durations can be based on one or more predefined operations of the mixing appliance. For example, the one or more predefined operations can include, without limitation mixing, chopping, whipping, blending, kneading, and the like. Additionally, or alternatively, in some aspects, the first and second rotational speeds and first and second durations can be based on other factors, such as a particular food type or ingredient, or a present or desired state of the food item or ingredient. Aspects can provide an operator such as a chef or cook with an appliance having a range of selectable output torques and speeds for mixing, blending, beating, kneading or otherwise acting upon a food item or ingredient, while freeing up the operator's time to perform other tasks during the mixing operation.

It is to be understood that the specific devices and processes illustrated in the attached drawings and described in the following specification are simply exemplary non-limiting aspects of the disclosure herein. Hence, specific dimensions and other physical characteristics relating to the aspects disclosed herein are not to be considered as limiting, unless the appended claims expressly state otherwise.

In describing aspects illustrated in the drawings, specific terminology will be resorted to for the sake of clarity. However, it is not intended that the aspects be limited to the specific terms so selected and it is to be understood that each specific term includes all technical equivalents that operate in a similar manner to accomplish a similar purpose. For example, the words "connected," "attached," "coupled," "engaged", and "mounted" and variations thereof herein are used broadly and encompass direct and indirect connections, attachments, couplings, engagements, and mountings. In addition, the terms "connected," "coupled," etc. and variations thereof are not restricted to physical or mechanical connections, couplings, etc. as all such types of connections should be recognized as being equivalent by those skilled in the art.

As used herein, the term "set" or a "set" of elements can be any non-zero number of elements, including only one. The exemplary drawings are for purposes of illustration only and the dimensions, positions, order and relative sizes reflected in the drawings attached hereto can vary.

Additionally, as used herein, a "processor", or "controller module" can include a component configured or adapted to provide instruction, control, operation, or any form of communication for operable components to affect the operation thereof. A processor or controller module can include any known processor, microcontroller, or logic device, including, but not limited to: Field Programmable Gate Arrays (FPGA), an Application Specific Integrated circuit (ASIC),a Proportional controller (P), a Proportional Integral controller (PI), a Proportional Derivative controller (PD), a Proportional Integral Derivative controller (PID controller), a hardware-accelerated logic controller (e.g. for encoding, decoding, transcoding, etc.), the like, or a combination thereof. Non-limiting examples of a controller module can be configured or adapted to run, operate, or otherwise execute program code to effect operational or functional outcomes, including carrying out various methods, functionality, processing tasks, calculations, comparisons, sensing or measuring of values, or the like, to enable or achieve the technical operations or operations described herein. The operation or functional outcomes can be based on one or more inputs, stored data values, sensed or measured values, true or false indications, or the like. While "program code" is described, non-limiting examples of operable or executable instruction sets can include routines, programs, objects, components, data structures, algorithms, etc., that have the technical effect of performing particular tasks or implement particular abstract data types. In another non-limiting example, a processor or controller module can also include a data storage component accessible by the processor, including memory, whether transient, volatile or non-transient, or nonvolatile memory.

Additional non-limiting examples of the memory can include Random Access Memory (RAM), Read-Only Memory (ROM), flash memory, or one or more different types of portable electronic memory, such as discs, DVDs, CD-ROMs, flash drives, universal serial bus (USB) drives, the like, or any suitable combination of these types of memory. In one example, the program code can be stored within the memory in a machine-readable format accessible by the processor. Additionally, the memory can store various data, data types, sensed or measured data values, inputs, generated or processed data, or the like, accessible by the processor in providing instruction, control, or operation to affect a functional or operable outcome, as described herein. In another non-limiting example, a control module can include comparing a first value with a second value, and operating or controlling operations of additional components based on the satisfying of that comparison. For example, when a sensed, measured, or provided value is compared with another value, including a stored or predetermined value, the satisfaction of that comparison can result in actions, functions, or operations controllable by the controller module. As used herein, the term "satisfies" or "satisfaction" of the comparison is used herein to mean that the first value satisfies the second value, such as being equal to or less than the second value, or being within a predetermined value range of the second value. It will be understood that such a determination may easily be altered to be satisfied by a positive/negative comparison or a true/false comparison. Example comparisons can include comparing a sensed or measured value to a threshold value or threshold value range.

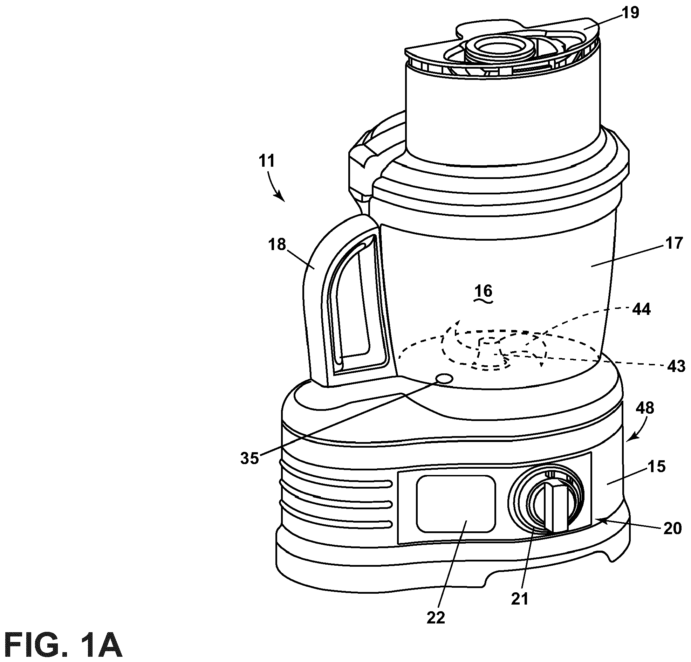

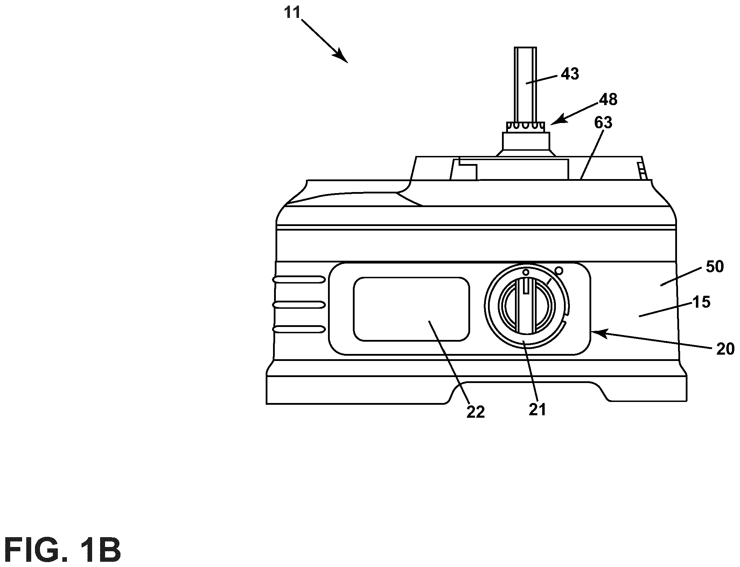

FIGS. 1A and 1B show an architecture of an electric mixing appliance or mixing appliance 11 having a multiple selectable output speeds in accordance with a non-limiting aspect. FIG. 1B depicts a perspective view of the mixing appliance of FIG. 1A with some parts omitted for clarity. For purposes of description herein, the terms "upper," "lower," "right," "left," "rear," "front," "vertical," "horizontal," and derivatives thereof shall relate to the mixing appliance 11 as oriented in FIG. 1A. However, it is to be understood that the device may assume various alternative orientations except when expressly specified to the contrary.

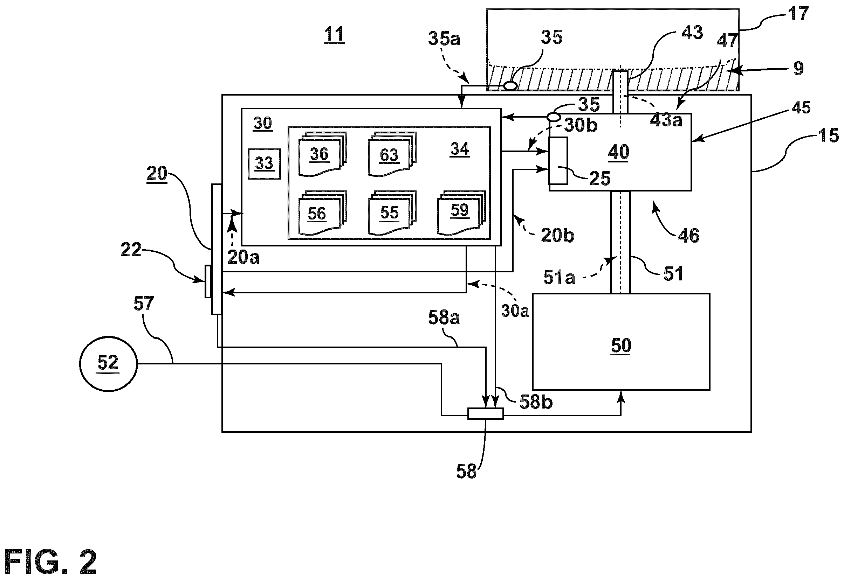

With simultaneous reference to FIGS. 1A and 1B, in non-limiting aspects, the mixing appliance 11 can include a housing 15 that contains a drive assembly 48. The drive assembly 48 can include an output shaft 43 that can extend from the housing 15 and is rotatable. In FIG. 1A, a tool 44 (illustrated as a set of blades) is shown rotatably coupled to the output shaft 43. The tool 44 can extend into a food preparation zone 16 disposed above the housing 15, wherein various food items or ingredients can be placed for processing, as desired by a user. In non-limiting aspects, the food preparation zone 16 can generally be defined by a vessel 17 with a handle 18 and a lid 19. The mixing appliance 11 can include a user interface 20 communicatively coupled to a controller module 30 (FIG. 2). The mixing appliance 11 can include a set of sensors 35 communicatively coupled with the controller module 30 (FIG. 2).

With continued reference to FIGS 1A and 1B, the user interface 20 can be disposed on the housing 15. The user interface 20 can include, for example, a slide or knob 21 to enable a user to selectively trigger an operation of the mixing appliance 11. It will be understood that this is by way of non-limiting example and that the user interface 20 can additionally or alternatively comprise, without limitation, pushbuttons, keys, or an electronic interface such as a touch screen or display 22, and combinations thereof. While FIGS. 1A and 1B depict the user interface 20 as disposed on the housing 15, other aspects are not so limited. For example, in other aspects, the user interface 20 can be disposed at any desired location, or combination of locations, on or remote from the mixing appliance 11, including, without limitation, a remote or mobile device (not shown), communicatively coupled to the controller module 30. In non-limiting aspects, the set of sensors 35 can be disposed on or within the housing 15, the drive assembly 48, the vessel 17, and combinations thereof, or in any other desired location without departing from the scope of the present disclosure.

FIG. 2 depicts, in simplified schematic format, the mixing appliance 11 of FIGS. 1A and 1B, and illustrates additional elements within the housing 15, and an exemplary food item 9 disposed in the vessel 17. The mixing appliance 11 can additionally include the controller module 30 having a memory 34. As shown, the controller module 30 is communicatively coupled to the user interface 20. In non-limiting aspects, the controller module 30 is further communicatively coupled to the set of sensors 35. The mixing appliance 11 can further include a drive motor 50 and a gearbox 40 disposed within the housing 15. The drive motor 50 can include a rotatable drive shaft 51 defining a first axis of rotation 51a. The gearbox 40 can include an enclosure 45 having an input side 46 and an output side 47. The output shaft 43 can extend from the output side 47. The output shaft 43 can be coupled at a first end to the rotatable drive shaft 51 to receive a torque therefrom. The output shaft 43 can be further coupled at a second end to the tool 44 (shown in FIG. 1A) to transmit a torque thereto. The output shaft 43 can define a second axis of rotation 43a. The second axis of rotation 43a can be axially aligned with the first axis of rotation 51a; however, this need not be the case. As will be discussed in more detail herein, the gearbox 40 includes a set of gears (not shown) defining a first gear train and a second gear train, arranged to cooperatively enable a first output speed ratio and a second output speed ratio, respectively.

The mixing appliance 11 can include an actuator 25 selectively moveable between a first actuator position and a second actuator position. The actuator 25 can be communicatively coupled to the user interface 20, or the controller module 30, or both. The actuator 25 can be movably coupled to the gearbox 40, and responsive to a first actuation signal 20b (e.g. a first voltage signal, by way of non-limiting example) from the user interface 20, or a second actuation signal 30b (e.g., a second voltage signal, by way of non-limiting example) from the controller module 30, or both.

The drive motor 50 can be electrically coupled to an electrical power source 52, such as a household AC power source, via a set of power lines 57. In non-limiting aspects, one of the power lines 57 can define a neutral line. In other non-limiting aspects, the electrical power source 52 can be a DC power source, such as a battery. A switching device 58, such as a relay, contactor, or other switch, can be coupled to the power lines to enable electrical power from the electrical power source 52 to be selectively or switchably provided to the drive motor 50 via the set of power lines 57. In non-limiting aspects, the switching device 58 can be communicatively coupled to the user interface 20, the controller module 30, or both. Although not shown for clarity, it will be appreciated that the electrical power source 52 can be further electrically coupled to the controller module 30 to provide electrical power thereto.

In non-limiting aspects, the set of sensors 35 can be disposed in various locations within the mixing appliance 11 and communicatively coupled to the controller module 30. The set of sensors 35 can be configured to detect, measure, or otherwise sense one or more respective parameters 36. Each sensor 35 can be arranged to provide a respective second input signal 35a to the controller module 30 indicative of the one or more respective parameters 36. For example, the one or more respective parameters 36 can be, directly or indirectly, at least partially indicative of one or more of, without limitation, an inertia of the drive motor 50, a speed of the drive motor 50, a torque of the drive motor 50, a voltage across a winding of the drive motor 50, a rotational velocity of the rotatable drive shaft 51, a viscosity of the food item 9 within the vessel 17, an amount of the food item 9 in the vessel 17, a moisture content of the food item 9 in the vessel 17, a weight of the food item 9, a temperature of the food item 9, and the like. The sensors 35 can comprise any desired conventional sensor type including, but not limited to, a voltage sensor, a current sensor, a temperature sensor, water level sensor, a weight sensor, a torque sensor, a speed sensor, a proximity sensor, a chemical sensor, a moisture sensor, a switch sensor, or combinations thereof.

The user interface 20 can be communicatively coupled with at least one of the controller module 30, the memory 34, the gearbox 40, the switching device 58, and combinations thereof. The first input signal 20a can be indicative of any desired information including, for example, without limitation, one or more of a selected mixing speed, a mixing operation, (for example blending, whipping, chopping, and the like), an ingredient or food item type and combinations thereof (for example, ice, butter, dough, and the like).

In non-limiting aspects, the user interface 20 can receive data from the controller module 30, via a display signal 30a indicative of information to be displayed on the display 22. The display 22 can include any suitable communication technology including that of a liquid crystal display (LCD), a light-emitting diode (LED) array, or any suitable display that can convey a message to the user. Other communications paths and methods, with or without the user interface 20, can also be included in the mixing appliance 11 to allow the controller module 30 to communicate with the user in a variety of ways. For example, the controller module 30 can be configured to send a text message to the user, send an electronic mail to the user, or provide audio information to the user either through the mixing appliance 11 or utilizing another device such as a mobile phone.

Additionally, the controller module 30 can be communicatively coupled to the user interface 20 to receive a first input signal 20a therefrom. The first input signal 20a can be indicative of a user input or user provided data. The controller module 30 can be further communicatively coupled to the set of sensors 35 to receive a respective second input signal 35a therefrom. The second input signal 35a can be indicative of a value of the respective parameter 36 that is sensed, measured, or detected by one or more sensors 35. In non-limiting aspects, the controller module 30 can be configured to determine the value of at least one respective parameter 36 based on the received second input signals 35a.

In non-limiting aspects, the controller module 30 can be communicatively coupled to the drive motor 50 to control an operation thereof. Control of the drive motor 50 can be based at least in part on the one or more respective parameters 36, one or more first input signal(s) 20a, or both.

The controller module 30 can include a number of electronic components commonly associated with electronic units utilized in the control of electromechanical systems. For example, the controller module 30 can include, a processor such as a central processing unit (CPU) 33, the memory 34, and an analog interface circuit (not shown).

The CPU 33 may be any type of device capable of executing software or firmware, such as a microcontroller, microprocessor, digital signal processor, or the like. For example, it is contemplated that the CPU 33 can be a microprocessor-based controller that implements control software and sends/receives one or more electrical signals to/from each of the various working components to effect control software.

The memory 34 can be embodied as one or more non-transitory, machine-readable media. The memory 34 can be configured to store, amongst other things, instructions in the form of, for example, a software routine (or routines) which, when executed by the CPU 33, allows the controller module 30 to control operation of the mixing appliance 11. The memory 34 can be used for storing the control software that is executed by the CPU 33 in performing a selected operation to be executed by the mixing appliance 11 and any additional software. For example, the memory 34 can store a set of executable instructions including at least one user-selectable operation. The memory 34 can also be used to store information, such as a database or table, and to store data received from one or more components of the mixing appliance 11 that can be communicably coupled with the controller module 30. The database or table can be used to store the various operating parameters for the one or more operations, including factory or default values for the operating parameters and any adjustments to them by the controller module 30 or by user interface 20.

For example, in non-limiting aspects, the memory 34 can store the determined values of the respective parameters 36. Additionally, in non-limiting aspects, the memory 34 can further store a set of predetermined selectable parameter values 63. The set of predetermined selectable parameter values 63 can be saved to the memory 34 prior to use (e.g., factory installed), or can be provided to the memory 34 by a user via the user interface 20, or a combination thereof. In some aspects, the set of predetermined selectable parameter values 63 can include one or more threshold or target values. Furthermore, as will be described in more detail herein, the memory 34 can store a set of predefined operational parameter values 56. For example, in some aspects, the predefined operational parameter values 56 can be, without limitation, one or more of a drive motor speed, an output shaft speed, an output shaft torque, a gearbox speed ratio, and combinations thereof. In non-limiting aspects, the predefined operational parameter values 56 can be correlated to respective values of the set of predetermined selectable parameter values 63. For example, based on a selection by a user via the user interface of one or more respective value of the set of predetermined selectable parameter values 63, or a determination of a value of a respective parameter 36, or both, one or more of the predefined operational parameter value 56 can be determined. In non-limiting aspects the predefined operational parameter values 56, can be indicative of any desired parameter, such as one or more of a drive motor speed, an output shaft speed, an output shaft torque, a gearbox speed ratio, and combinations thereof.

In some aspects the memory 34 can further store a set of predefined operations 55 of the mixing appliance 11. For example, the set of predefined operations 55 can include, without limitation, a mixing operation, a chopping operation, a whipping operation, a blending operation, a kneading operation, and the like. Each predefined operation 55 of the set of predefined operations 55 can be defined at least in part by the one or more respective predefined operational parameter values 56. For example, in non-limiting aspects, the predefined operational parameter values 56 can include a rotational speed or an output torque, or both, of the output shaft 43. The predefined operational parameter values 56 can further include a respective duration 59. In non-limiting aspects, the respective duration 59 can be a predetermined duration of time. In some aspects, the respective duration 59 can be based on satisfying a threshold or target value such as a respective value of the set of predetermined selectable parameter values 63. In non-limiting aspects, a particular predefined operation 55 can be defined at least in part by a sequence of predefined operations 55. For example, in one instance, a particular sequence of predefined operations 55 can include a first predefined operation 55 for a respective duration 59 of a first time, followed by a second predefined operation 55 for a respective duration 59 of a second time. The first time and the second time can be the same or different. Other sequences of predefined operations 55 can include any number of predefined operations 55 of the set of predefined operations 55 for any respective duration 59 of any time in any predetermined order.

In operation and with respect to the non-limiting exemplary figures, the user interface 20 can be used by a user to manually toggle (e.g., ON/OFF) power to the mixing appliance 11. For example, the user interface 20 can provide a signal to the switching device 58 to toggle the switching device between an ON or conducting state, and an OFF or non-conducting state. Additionally, or alternatively, the user interface 20 can be used by a user to manually select a speed setting for the output shaft 43. For example, a user can provide the first input signal 20a or instructions to the controller module 30 via the user interface 20. In non-limiting aspects, information indicated by the first input signal 20a can be saved to the memory 34.

In some aspects, a desired predefined operation 55 of the set of predefined operations 55 can be selectable by the user via the user interface 20. For example, the user can provide the first input signal 20a or instructions to the controller module 30, via the user interface 20. The first input signal 20a can be indicative of the selected predefined operation 55 to be executed by the mixing appliance 11. In some aspects, the selected predefined operation 55 of the set of predefined operations 55 can be selected from the memory 34 by the controller module 30 based on one or more first input signals 20a, or one or more second input signals 35a received from the set of sensors 35, or a combination thereof.

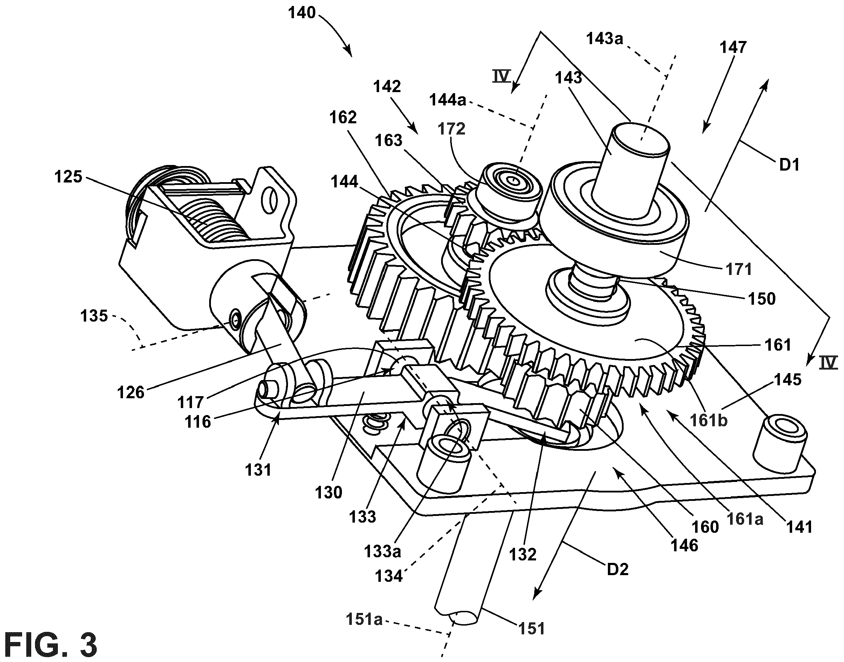

FIG. 3 depicts a perspective view of a non-limiting aspect a gearbox and rotatable drive shaft usable with the mixing appliance of FIG. 2. The exemplary aspect of FIG. 3 is similar to the aspect depicted in FIG. 2, therefore, like parts in the illustration of FIG. 3 are identified with the same reference numbers as in FIG. 2, incremented by 100. FIG. 3 depicts the gearbox 140 coupled to the actuator 125 and the rotatable drive shaft 151, with portions of the enclosure 145 omitted for clarity. As illustrated, the actuator 125 can be a conventional solenoid actuator. The actuator 125 can include a moveable member 126. The gearbox 140 can include a shifter member 130 coupled at a first end 131 to the actuator 125. The gearbox 140 includes an input gear 160, a first gear 161, a second gear 162, and a third gear 163. The gearbox 140 can include the output shaft 143, and a layshaft 144. The gearbox 140 can also include a resilient member 150. The gearbox 140 can optionally include a first bearing member 171 circumscribing the output shaft 143, and a second bearing member 172 circumscribing the layshaft 144. The first bearing member 171 and second bearing member 172 can be supported by the enclosure 145.

The gearbox 140 can define a first gear train 141 defining a first gear ratio and a second gear train 142 defining a second gear ratio. In non-limiting aspects, one of the first gear train 141 or the second gear train 142 can be selectively engaged. As will be discussed in more detail herein, the gearbox 140 can be selectively shifted between an engagement with the first gear train 141 or the second gear train 142, to an engagement with the other of the first gear train 141 or the second gear train 142. When the first gear train 141 is engaged, the gearbox 140 can drive a rotation of the output shaft 143 at a first output speed ratio, and when the second gear train 142 is engaged, the gearbox 40 can drive a rotation of the output shaft 143 at a second output speed ratio. It is contemplated that in non-limiting aspects, one of the first output speed ratio or the second output speed ratio can be 1:1. For example, in the non-limiting aspect illustrated in FIG.3, the first gear train 141 includes the rotatable drive shaft 151 rotatably coupled to the output shaft 143 to arrange a first output speed ratio of 1:1, while the second gear train 142 includes the rotatable drive shaft 151, the input gear 160, the first gear 161, the second gear 162, the layshaft 144, the third gear 163, and the output shaft 143 to arrange a second output speed ratio as desired. However, in other non-limiting aspects the first drive train 141 can be configured with any desired number of gears to arrange any desired first gear ratio or first output speed ratio or both, without departing from the scope of the disclosure. Additionally, in other non-limiting aspects the second drive train 142 can be configured with any desired number of gears to a to arrange any desired second gear ratio or second output speed ratio or both, without departing from the scope of the disclosure.

The moveable member 126 is selectively moveable between the first actuator position and the second actuator position. For example, the moveable member 126 can be arranged to rotate about a first pivot axis 135. The moveable member 126 can be operatively coupled to the shifter member 130. In non-limiting aspects, the shifter member 130 can be a shift fork having the first end 131 coupled to the moveable member 126, and an opposing second end 132 movably coupled to the input gear 160. The shifter member 130 can include a middle segment 133 disposed between and coupled to the first end 131 and second end 132. The middle segment 133 can define a second pivot axis 134, and can be pivotably coupled to a fulcrum 116. For example, in non-limiting aspects, the middle segment 133 can define an aperture 133a therethrough, concentric with the second pivot axis 134. The aperture 133a can be sized to receive the fulcrum 116 in the form of a fixed shaft 117 therethrough, and the shifter member 130 arranged to pivot about the fixed shaft 117. In non-limiting aspects, the first pivot axis 135 can be arranged orthogonal to the second pivot axis 134.

The layshaft 144 can be arranged to rotate about a third axis of rotation 144a. The third axis of rotation 144a can be parallel to the second axis of rotation 143a. The output shaft 143 can extend between the input side 146 to the output side 147. The output shaft 143 can be axially aligned with the first axis of rotation 151a, and rotatably coupled to the rotatable drive shaft 151.

The first gear 161 is rotatably coupled to and circumferentially surrounds the output shaft 143. The first gear 161 can be axially slidable along the output shaft 143 in a first direction D1 toward the output side 147, and in a second direction D2 toward the input side 146. In non-limiting aspects, the first gear 161, can have a first axial face 161a facing the second direction D2 and an opposing second axial face 161b facing the first direction D1. The first axial face 161a can define a first engagement surface.

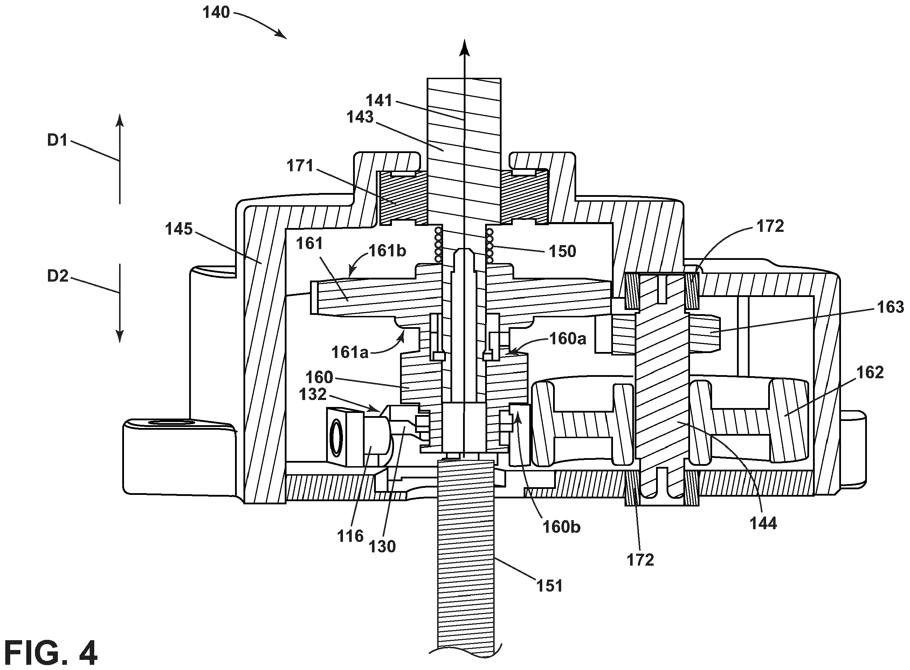

The input gear 160 is rotatably coupled to and circumferentially surrounds the output shaft 143. The input gear 160 is axially slidable along the output shaft 143 in the first direction D1 and the second direction D2. The input gear 160 can have a third axial face 160a (shown in FIG. 4) facing the first direction D1, and an opposing fourth axial face 160b (shown in FIG. 4) facing the second direction D2. The third axial face 160a can opposingly face the first axial face 161a and can define a second engagement surface. The second engagement surface can be selectively engageable with the first engagement surface to rotatably couple the input gear 160 to the first gear 161. For example, in non-limiting aspects, the first engagement surface and second engagement surface can define respective face splines.

In non-limiting aspects, the resilient member 150 can be arranged to apply a force to the first gear 161 in the second direction D2. For example, the resilient member 150 can be a spring, such as a coil spring or a leaf spring. The resilient member 150 can be disposed between the first gear 161 and the enclosure 145 or the first bearing member 171. In one particular non-limiting aspect, the resilient member 150 can be a coil spring arranged to circumferentially surround the output shaft 143.

The second gear 162 is rotatably coupled to and circumferentially surrounds the layshaft 144. The second gear 162 can be rotatably engageable with the input gear 160 when the second gear train 142 is engaged. The third gear 163 rotatably coupled to and circumferentially surrounds the layshaft 144. The third gear 163 is axially spaced from the second gear 162, and can be selectively rotatably engaged with the first gear 161 when the second gear train 142 is engaged.

In operation, the actuator 125 can drive a movement of the moveable member 126 between the first actuator position and the second actuator position. For example, the actuator 125 can be configured to trigger a movement of the moveable member 126 between the first actuator position or second actuator position to the other of the first actuator position or second actuator position. In non-limiting aspects, a movement of the moveable member 126 to the first actuator position can cause an engagement of the first gear train 141.

FIG. 4 depicts a cross-section view of the gearbox 140 of FIG. 3 taken along the line IV-IV, with the first gear train 141 (indicated by solid arrow) engaged and the actuator 125 omitted for clarity. As illustrated, in non-limiting aspects, the first gear train 141 (e.g., including the rotatable drive shaft 151 rotatably coupled to the output shaft 143 ) is engaged when the input gear 160 is disengaged from the second gear 162, and the first gear 161 is disengaged from the third gear 163. For example, a movement of the moveable member 126 (shown in FIG. 3) to the first actuator position can cause the shifter member 130 to pivot about the fulcrum 116 to cause a movement of the second end 132 in the first direction D1, to a first shifter position, resulting in a corresponding movement of the input gear 160 in the first direction D1 along the output shaft 143. In non-limiting aspects, the movement of the input gear 160 in the first direction D1 can result in a disengagement of the input gear 160 from the second gear 162 as shown. In non-limiting aspects, the movement of the input gear 160 in the first direction D1 can also cause the input gear 160 third axial face 160a to engage the first axial face 161a, and apply a force to the first gear 161 in the first direction D1. In this way, the movement of the input gear 160 in the first direction D1 can result in or cause a corresponding movement of the first gear 161 along the output shaft 143 in the first direction D1. In non-limiting aspects, the movement of the first gear 161 in the first direction D1 can further result in a disengagement of the first gear 161 and the third gear 163 as shown. In some aspects, an engagement of the first gear train 141 can enable the output shaft 143 to rotate as a direct drive output having a rotational speed equal to a speed of rotation of the rotatable drive shaft 151. Conversely, in non-limiting aspects, a movement of the actuator 125 (shown in FIG. 3) to the second actuator position can cause an engagement of the second gear train 142 (indicated by solid arrow).

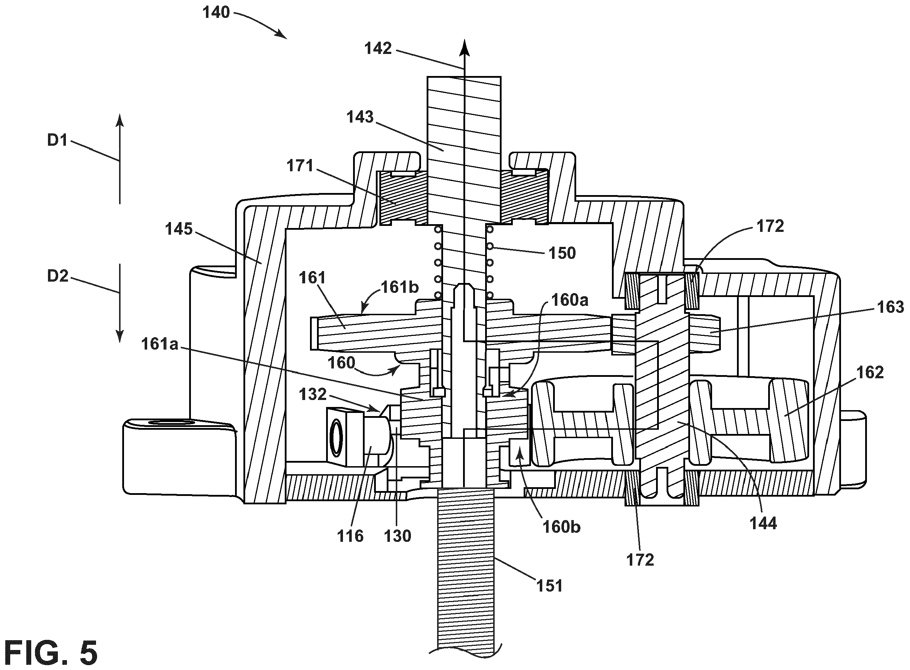

FIG. 5 depicts a cross-section view of the gearbox 140 and rotatable drive shaft 151 of FIG. 3 taken along the line IV-IV, with and the second gear train 142 engaged, and the actuator 125 omitted for clarity. The second gear train 142 is engaged when the input gear 160 is drivably engaged with the second gear 162, and the first gear 161 is drivably engaged with the third gear 163. For example, in non-limiting aspects, a movement of the actuator 125 to the second actuator position can cause the shifter member 130 to pivot about the fulcrum 116 to cause the second end 132 to move in the second direction D2, to a second shifter position, resulting in a movement of the input gear 160 in the second direction D2 along the output shaft 143. The movement of the input gear 160 in the second direction D2 along the output shaft 143 can result in a drivable engagement of the input gear 160 with the second gear 162. In non-limiting aspects, the movement of the input gear 160 in the second direction D2 along the output shaft 143 can further cause the second engagement surface of the input gear 160 to disengage from the first engagement surface of the first gear 161.

In non-limiting aspects, the resilient member 150 can apply the force to the first gear 161 in the second direction D2 resulting in a movement of the input gear 160 in the second direction D2 along the output shaft 143. In this way, the movement of the input gear 160 in the second direction D2 can result in or enable a corresponding movement of the first gear 161 in the second direction D2 along the output shaft 143. The movement of the first gear 161 in the second direction D2 along the output shaft 143 can result in a drivable engagement of the first gear 161 with the third gear 163. In some aspects, as illustrated, an engagement of the second gear train 142 of the gearbox 140 can enable the output shaft 143 to rotate at a different speed of rotation than the rotatable drive shaft 151.

As will be appreciated, a rotational speed of the output shaft 143 can be inversely proportional to torque (e.g., t = 1/v, where "t" is torque and "v" is rotational velocity or speed). Therefore, in the illustrated aspect of FIG. 4, the first gear train 141 is depicted as configured for a relatively high-speed, low torque, e.g., equal to the speed and torque of the rotatable drive shaft 151. For example, in one particular non-limiting aspect, the first gear train 141 can provide an output speed range of 600-1350 revolutions per minute (rpm) for thoroughly mixing, blending, beating, whipping and the like, of the food item or ingredient. Conversely, as depicted in the illustrated aspect of FIG. 5, the second gear train 142 is shown has having a relatively low gearing ratio to provide the mixing appliance with a high torque and low-speed output. For example, in one particular non-limiting aspect, the second gear train 142 can provide an output speed range of 200-450 rpm for preparation of thick or delicate food items or ingredients. It is to be understood that other aspects can have other output speed ratios of the first gear train 141 and second gear train 142 as desired.

A rotation of the first gear train 141 and second gear train 142 can be fully synchronized via the input gear 160. In this way, aspects as disclosed herein can be selectively shifted, for example via the actuator 125, between a first operation using the first gear train 141 and second operation using the second gear train 142 without need of a clutch.

In operation, and with simultaneous reference to FIGS. 1A-5, The user can place any desired food item 9 or ingredient into the food preparation zone 16 defined by the vessel 17. The vessel 17 can be disposed on the mixing appliance 11 such that the tool 44 is engaged with the food item or ingredients during operation. Electrical power can be provided to the drive motor 50 from the electrical power source 52 via the set of power lines 57. For example, electrical power can be selectively provided to the drive motor 50 via the set of power lines 57 based on an input 58a to the switching device 58 from a user via the user interface 20. Alternatively, the electrical power can be switchably provided via the switching device 58 based on an input 58b from the controller.

The user can select a desired predefined operation 55 of the set of predefined operations 55 to be executed by the mixing appliance 11, or a desired rotational speed or torque of the output shaft 143, or both. For example, the user can provide the first input signal 20a or instructions to the controller module 30, via the user interface 20. The first input signal 20a can be indicative of the desired predefined operation 55, or predefined sequence of operations 55, of the set of predefined operations 55 to be executed by the mixing appliance 11. In non-limiting aspects, the controller module 30 can select the predefined operation 55, or predefined sequence of operations 55, from the memory 34. The selection by the controller module 30 of the predefined operation 55 from the memory 34 can be based on the first input signal 20a from the user, or one or more second input signals 35a received from the set of sensors 35, or both. Additionally, or alternatively, the controller module 30 can determine a desired rotational speed or torque of the output shaft 143. The desired rotational speed or torque of the output shaft 143 can be correlated to one of the first gear train 141 and second gear train 142. The determination of desired rotational speed or torque of the output shaft 143 can be based on the first input signal 20a or the selected predefined operation 55 or both.

The controller module 30 can be configured to selectively activate or energize components of the mixing appliance 11, such as the drive motor 50, actuator 125, gearbox 140, user interface 20, and combinations thereof. The selective activating or energizing can be based on, without limitation, the second input signal 35a received from one or more sensors 35, the first input signal 20a, the predefined operation 55 or predefined sequence of operations 55 of the set of predefined operations 55, the determined desired rotational speed or torque, or combinations thereof. For example, the controller module 30 can automatically provide the second actuation signal 30b to the actuator 125 to trigger an engagement of the gearbox 140 to one of the first gear train 141 or second gear train 142 associated with the predefined operation 55 or the desired rotational speed or torque of the output shaft 143. The controller module 30 can be configured to provide the second actuation signal 30b to the actuator 125 based on a particular selected sequence of operations 55 of the set of predefined operations 55. The actuator 125 can be configured to move from the first or second actuator position to the other of the first or second actuator position in response to the second actuation signal 30b.

The selected predefined operation 55 of the set of predefined operations 55 can include without limitation, a mixing operation, chopping operation, blending operation, whipping operation, kneading operation, and the like, and combinations thereof. The selected predefined operation 55 can include the first predefined operation 55 and the second predefined operation 55 performed sequentially. For example, in one exemplary non-limiting aspect, the first predefined operation 55 can include rotating the output shaft 43 at a predetermined first output speed for a respective duration 59 of a first time, and then rotating the output shaft 43 at a predetermined second output speed for a respective duration 59 of a second time. In another exemplary non-limiting aspect, the first predefined operation 55 can include rotating the output shaft 43 to provide a predetermined first output torque for a respective duration 59 of a first time, and then rotating the output shaft 43 to provide a predetermined second output torque for a second respective duration 59 of a second time. Further, in some aspects, the selection by the controller module 30 of the first predefined operation 55 and the second predefined operation 55 (for example, the first and second output torque and the first and second duration s) can be based on a measured value of one or more sensed parameters 36. The sensed parameters 36 can include, without limitation, the type, amount, weight, temperature, viscosity, and combinations thereof, of the food item or ingredients to be mixed. In non-limiting aspects, the value of each sensed parameter 36 can be provided by the user to the controller module 30 via the user interface 20. In other non-limiting aspects, one or more of the values of the sensed parameters 36 can be provided to the controller module 30 via the set of sensors 35.

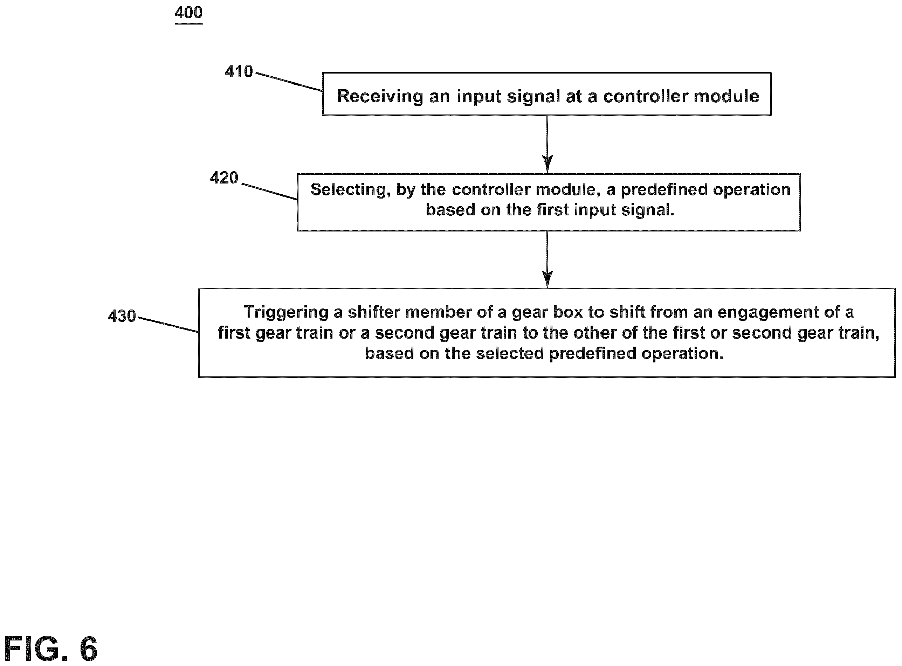

FIG. 6 depicts a flow chart of a non-limiting aspect of a method 400 of controlling a mixing appliance 11. Although described in terms of the mixing appliance 11, it will be appreciated that the method 400 can be applied to any suitable food processing device configured to rotatably drive a tool 44 at a first output speed ratio and a second output speed ratio. While the method 400 will be described herein, for ease of understanding, in terms of the mixing appliance 11 of FIGS. 1-5, other aspects are not so limited and method 400 can be implemented with any desired mixing appliance without departing from the scope of the disclosure.

In non-limiting aspects, the method 400 can include at 410, receiving at the controller module 30, the first input signal 20a. For example, the controller module 30 can be communicatively coupled to the user interface 20 to receive the first input signal 20a therefrom. The first input signal 20a can be indicative of user input or user provided data. The first input signal 20a can include any desired information including, for example, without limitation, selected mixing speeds, mixing operations, (for example blending, whipping, chopping, and the like), ingredients or food item types and combinations thereof (for example, ice, butter, dough, and the like). The first input signal 20a can additionally or alternatively be indicative of the selected predefined operation 55 of the set of predefined operations 55 to be executed by the mixing appliance 11.

In non-limiting aspects, the controller module 30 can include the memory 34 storing the set of predefined operations 55. Each predefined operation 55 of the set of predefined operations 55 can be defined by a respective engagement of the first gear train 141 for a respective duration 59 of a first time or an engagement of the second gear train 142 for a respective duration 59 of a second time. The method 400 can further include, at 420, selecting, by the controller module 30, a predefined operation 55 of the set of predefined operations 55, based on the first input signal 20a. The controller module 30 can be further configured to provide the second actuation signal 30b to the actuator 125 based on the selected predefined operation 55. In some aspects, the predefined operation 55 of the set of predefined operations 55 can include a sequence of operations 55. The sequence of operations 55 can be defined by at least one engagement of the first gear train 141 for a respective duration 59 of a first time and at least one engagement of the second gear train 142 for a respective duration 59 of a second time. The controller module 30 can be further configured to select the sequence of operations 55 based on the first input signal 20a.

The method 400 can include, at 430, triggering a shifter member 130 of the gearbox 140 to shift an engagement of the first gear train 141 or the second gear train 142 to an engagement of the other of the first gear train 141 or second gear train 142, The triggering the shifter member 130 can be based on the first input signal 20a or on the selected predefined operation 55 of the set of predefined operations 55, or both. For example, the mixing appliance 11 can further comprise the actuator 125 coupled to the shifter member 130, and the triggering the shifter member 130 can include selectively moving the actuator 125 to a first actuator position to drive the shifter member 130 to the first shifter position, or moving the actuator 125 to a second actuator position to drive the shifter member 130 to the second shifter position. In non-limiting aspects, the controller module 30 is communicatively coupled to the actuator 125. The controller module 30 can be configured to provide the second actuation signal 30b to the actuator 125 based on the selected sequence of operations 55. The actuator 125 can be configured to move from the first or second actuator position to the other of the first or second actuator position in response to the second actuation signal 30b.

To the extent not already described, the different features and structures of the various embodiments can be used in combination with each other as desired. That one feature may not be illustrated in all of the embodiments is not meant to be construed that it cannot be, but is done for brevity of description. Thus, the various features of the different embodiments can be mixed and matched as desired to form new embodiments, whether or not the new embodiments are expressly described. All combinations or permutations of features described herein are covered by this disclosure. Further, while the invention has been specifically described in connection with certain specific embodiments thereof, it is to be understood that this is by way of illustration and not of limitation. In addition to the concepts covered by the below claims, the following concepts can also provide the basis for claims in any possible combinations:

A mixing appliance, comprising a housing, a motor located in the housing and having a rotatable drive shaft, a gearbox located in the housing, having an input side and an output side, the gearbox including a rotatable output shaft, the rotatable output shaft axially aligned with and rotatably coupled to the rotatable drive shaft at the input side, wherein the gearbox includes a first gear train having a first output speed ratio and a second gear train having a second output speed ratio, a shifter member moveably coupled to an input gear, the shifter member selectively moveable between a first shifter position and a second shifter position, wherein, in response to a first movement of the shifter member to the first shifter position, the input gear is moveable in a first direction to be disengaged from a second gear, and a first gear is moveable in the first direction to be disengaged from a third gear, to define the first gear train of the gearbox, and wherein in response to a second movement of the shifter member to the second shifter position, the input gear is moveable in a second direction to be in rotatable engagement with the second gear, and the first gear is moveable in the second direction to be in rotatable engagement with the third gear to define the second gear train of the gearbox.

The mixing appliance of the preceding clause wherein the first gear is rotatably coupled to and circumscribing the rotatable output shaft and is axially slidable along the output shaft in the first direction toward the output side, and in the second direction toward the input side, the input gear is rotatably coupled to and circumscribing the rotatable drive shaft and is axially moveable along the rotatable drive shaft in the first direction and the second direction, the input gear selectively rotatably engageable with the first gear, the second gear is selectively rotatably engageable with the input gear, and the third gear is axially spaced from the second gear, and selectively rotatably engageable with the first gear.

The mixing appliance of any of the preceding clauses, further comprising an actuator coupled to the shifter member, the actuator selectively moveable between a first actuator position to drive the shifter member to the first shifter position, and a second actuator position, to drive the shifter member to the second shifter position.

The mixing appliance of any of the preceding clauses, further comprising a user interface, communicatively coupled to the actuator, wherein in response to a first actuation signal from the user interface, the actuator is configured to move from the first or second actuator position to the other of the first or second actuator position.

The mixing appliance of any of the preceding clauses, further comprising a controller module communicatively coupled to the actuator, wherein in response to a second actuation signal from the controller module, the actuator is further configured to move from the first or second actuator position to the other of the first or second actuator position.

The mixing appliance of any of the preceding clauses, further comprising a user interface, wherein the controller module is communicatively coupled to the user interface and configured to receive a first input signal therefrom, wherein the controller module is configured to provide the second actuation signal to the actuator based on the first input signal.

The mixing appliance of claim any of the preceding clauses, further comprising a set of sensors communicatively coupled to the controller module, each sensor configured to provide a respective second input signal to the controller module indicative of a value of a sensed parameter, and wherein the controller module is configured to provide the second actuation signal to the actuator based on at least one of the first input signal and second input signal.

The mixing appliance of any of the preceding clauses, further comprising a memory storing a set of predefined operations, each predefined operation of the set of predefined operations defined by at least one of an engagement of the first gear train for a first duration and an engagement of the second gear train for a second duration.

The mixing appliance of any of the preceding clauses, wherein the controller module is further configured to select a predefined operation of the set of predefined operations from the memory based on at least one of the first input signal and second input signal.

The mixing appliance of any of the preceding clauses, wherein the controller module is further configured to provide the second actuation signal to the actuator based on the selected predefined operation of the set of predefined operations.

The mixing appliance of any of the preceding clauses, wherein the selected predefined operation of the set of predefined operations includes a sequence of operations, each sequence of operations defined by at least one engagement of the first gear train for a first duration and at least one engagement of the second gear train for a second duration.

The mixing appliance of any of the preceding clauses, wherein the controller module is further configured to select the sequence of operations from the memory based on at least one of the first input signal and second input signal.

The mixing appliance of any of the preceding clauses, wherein the controller module is further configured to provide the second actuation signal to the actuator based on the selected sequence of operations.

A method of operating a mixing appliance, the mixing appliance having a controller module and a motor configured to rotate a rotatable drive shaft rotatably coupled to an output shaft via a gearbox, the gearbox including a first gear train having a first output speed ratio and a second gear train having a second output speed ratio, the gearbox selectively shiftable between an engagement of the a first gear train and an engagement of the second gear train, the method comprising: receiving at the controller module a first input signal; selecting, by the controller module, a predefined operation based on the first input signal; and triggering a shifter member of the gearbox to shift from an engagement of the first gear train or the second gear train to an engagement of the other of the first or second gear train, based on the selected predefined operation.

The method of the preceding clause, wherein the mixing appliance further comprises an actuator coupled to the shifter member, wherein the triggering the shifter member comprises one of selectively moving the actuator to a first actuator position to drive the shifter member to the first shifter position, or selectively moving the actuator to a second actuator position to drive the shifter member to the second shifter position.

The method of any of the preceding clauses, wherein the actuator is further configured to move from the first or second actuator position to the other of the first or second actuator position in response to an actuation signal, and wherein the selectively moving the actuator includes providing the actuation signal from the controller module to the actuator.

The method of any of the preceding clauses, wherein the controller module configured to receive a first input signal from a user interface, and wherein the providing the actuation signal to the actuator is responsive to the first input signal.

The method of any of the preceding clauses, further comprising selecting, by the controller module, a predefined operation from a memory based on the first input signal, wherein each predefined operation is defined by at least one of an engagement of the first gear train for a first duration or an engagement of the second gear train for a second duration.

The method of any of the preceding clauses, wherein the providing the actuation signal to the actuator is further based on the selected predefined operation; and wherein the selected predefined operation includes a sequence of operations, the sequence of operations being defined by at least one engagement of the first gear train for a first duration and at least one engagement of the second gear train for a second duration.

The method of any of the preceding clauses, wherein the selecting, by the controller module, of the predefined operation includes selecting the sequence of operations, and wherein the providing an actuation signal to the actuator is based on the selected sequence of operations.

While the invention has been specifically described in connection with certain specific embodiments thereof, it is to be understood that this is by way of illustration and not of limitation. Reasonable variation and modification are possible within the scope of the foregoing disclosure and drawings without departing from the scope of the invention which is defined in the appended claims.

## Claims

1. A mixing appliance (11), comprising:
a motor (50) having a rotatable drive shaft (51); and
a gearbox (40) including a rotatable output shaft (143),
wherein the gearbox (40) includes a first gear train (141) having a first output speed ratio and a second gear train (142) having a second output speed ratio,
**characterised by** further comprising a shifter member (130),
optionally wherein the shifter member (130) is configured to be selectively triggered to shift an engagement of the first gear train (141) or the second gear train (142) to the other of the first or second gear train (141, 142).

2. The mixing appliance (11) of claim 1, further comprising a housing (15), the motor (50) and the gearbox (40) being located in the housing (15), the gearbox (40) having an input side (46) and an output side (47), wherein the rotatable drive shaft (51) is coupled to the gearbox (40),
optionally wherein the rotatable output shaft (143) is axially aligned with and rotatably coupled to the rotatable drive shaft (51) at the input side (46).

3. The mixing appliance (11) of claim 1 or claim 2, wherein the shifter member (130) is moveably coupled to an input gear (160) and is selectively moveable between a first shifter position and a second shifter position.

4. The mixing appliance (11) of claim 3, wherein:
in response to a first movement of the shifter member (130) to the first shifter position, the input gear (160) is moveable in a first direction to be disengaged from a second gear (162), and a first gear (161) is moveable in the first direction to be disengaged from a third gear (163), to define the first gear train (141) of the gearbox (40); and
in response to a second movement of the shifter member (130) to the second shifter position, the input gear (160) is moveable in a second direction to be in rotatable engagement with the second gear (162), and the first gear (161) is moveable in the second direction to be in rotatable engagement with the third gear (163) to define the second gear train (142) of the gearbox (40).

5. The mixing appliance (11) of claim 4, wherein:
the first gear (161) is rotatably coupled to the rotatable drive shaft (51) and/or to the rotatable output shaft (143) and is axially slidable along the rotatable drive shaft (51) and/or along the output shaft (143) in the first direction toward the output side (47), and in the second direction toward the input side (46);
the input gear (160) is rotatably coupled to the rotatable drive shaft (51) and/or to the rotatable output shaft (143) and is axially moveable along the rotatable drive shaft (51) and/or along the rotatable output shaft (143) in the first direction and in the second direction, the input gear (160) being selectively rotatably engageable with the first gear (161);
the second gear (162) is selectively rotatably engageable with the input gear (160); and
the third gear (163) is axially spaced from the second gear (162), and selectively rotatably engageable with the first gear (161).

6. The mixing appliance (11) of any one of claims 3 to 5, further comprising an actuator (125), in particular a solenoid actuator, coupled to the shifter member (130), the actuator (125) being selectively moveable between a first actuator position, to drive the shifter member (130) to the first shifter position, and a second actuator position, to drive the shifter member (130) to the second shifter position.

7. The mixing appliance (11) of claim 6, further comprising a user interface (20), communicatively coupled to the actuator (125), wherein, in response to a first actuation signal (20b) from the user interface (20), the actuator (125) is configured to move from the first or second actuator position to the other of the first or second actuator position and/or to selectively trigger the shifter member (130) to shift an engagement of the first gear train (141) or the second gear train (142) to the other of the first or second gear train (141; 142).

8. The mixing appliance (11) of claim 6 or claim 7, further comprising a controller module (30) communicatively coupled to the actuator (125), wherein, in response to a second actuation signal (30b) from the controller module (30), the actuator (125) is further configured to move from the first or second actuator position to the other of the first or second actuator position and/or to selectively trigger the shifter member (130) to shift an engagement of the first gear train (141) or the second gear train (142) to the other of the first or second gear train (141; 142),
optionally wherein the controller module (30) is communicatively coupled to the user interface (20) and configured to receive a first input signal (20a) therefrom, and wherein the controller module (30) is configured to provide the second actuation signal (30b) to the actuator (125) based on the first input signal (20a).

9. The mixing appliance (11) of claim 8, further comprising:
a set of sensors (35) communicatively coupled to the controller module (30), each sensor (35) being configured to provide a respective second input signal (35a) to the controller module (30) indicative of a value of a sensed parameter, wherein the controller module (30) is configured to provide the second actuation signal (30b) to the actuator (125) based on at least one of the first input signal (20a) and second input signal (35a); and/or
a memory (34) storing a set of predefined operations (55), each predefined operation (55) of the set of predefined operations (55) being defined by at least one of an engagement of the first gear train (141) for a first duration and an engagement of the second gear train (142) for a second duration,
optionally wherein the controller module (30) is further configured to select a predefined operation (55) of the set of predefined operations (55) from the memory (34) based on at least one of the first input signal (20a) and second input signal. (35a).

10. The mixing appliance (11) of claim 9, wherein:
the controller module (30) is further configured to provide the second actuation signal (30b) to the actuator (125) based on the selected predefined operation (55) of the set of predefined operations (55) and/or
the selected predefined operation (55) of the set of predefined operations (55) includes a sequence of operations (55), each sequence of operations (55) being defined by at least one engagement of the first gear train (141) for a first duration and at least one engagement of the second gear train (142) for a second duration,
optionally wherein the controller module (30) is further configured to select the sequence of operations (55) from the memory (34) based on at least one of the first input signal (20a) and second input signal (35a) and/or to provide the second actuation signal (30b) to the actuator (125) based on the selected sequence of operations (55).

11. The mixing appliance (11) of any one of the previous claims, wherein the gearbox (140) includes:
a resilient member (150), in particular a coil spring arranged to circumferentially surround the output shaft (143), the resilient member (150) being configured to apply a force to the first gear (161) in the second direction, and/or
a first bearing member (171) circumscribing the output shaft (143) and a second bearing member (172) circumscribing a layshaft (144) coupled to the second gear (162) and to the third gear (163), the layshaft (144) being in particular arranged to rotate about an axis of rotation parallel to the axis of rotation of the output shaft (143).

12. The mixing appliance (11) of any one of the previous claims, wherein the shifter member (130) is coupled at a first end (131) to the actuator (125) and wherein the actuator (125) includes a moveable member (126) operatively coupled to the shifter member (130) and selectively moveable between the first actuator position and the second actuator position,
optionally wherein the moveable member (126) is arranged to rotate about a first pivot axis (135); and/or
optionally wherein the shifter member (130) is a shift fork having the first end (131) coupled to the moveable member (126), and an opposing second end (132) movably coupled to the input gear (160); and/or
optionally wherein the shifter member (130) includes a middle segment (133) disposed between and coupled to the first end (131) and the second end (132), the middle segment (133) defining a second pivot axis (134) and being pivotably coupled to a fulcrum (116), the second pivot axis (134) being in particular arranged orthogonal to the first pivot axis (135).

13. The mixing appliance (11) of any one of the previous claims, wherein:
the first gear (161) has a first axial face (161a) facing the second direction and an opposing second axial face (161b) facing the first direction;
the first axial face (161a) defines a first engagement surface;
the input gear (160) has a third axial face (160a) facing the first direction and an opposing fourth axial face (160b) facing the second direction;
the third axial face (160a) defines a second engagement surface; and
the second engagement surface is selectively engageable with the first engagement surface to rotatably couple the input gear (160) to the first gear (161),
optionally wherein the first engagement surface and the second engagement surface define respective face splines.

14. A method (400) of operating a mixing appliance (11), the mixing appliance (11) having a controller module (30) and a motor (50) configured to rotate a rotatable drive shaft (51) rotatably coupled to an output shaft (143) via a gearbox (40), the gearbox (40) including a first gear train (141) having a first output speed ratio and a second gear train (142) having a second output speed ratio, the gearbox (40) being selectively shiftable between an engagement of the a first gear train (141) and an engagement of the second gear train (142), the method comprising:
receiving (410) at the controller module (30) a first input signal;
selecting (420), by the controller module (30), a predefined operation based on the first input signal; and
triggering (430) a shifter member (130) of the gearbox (40) to shift from an engagement of the first gear train (141) or the second gear train (142) to an engagement of the other of the first or second gear train (141; 142), based on the selected predefined operation.

15. The method (400) of the preceding claim, wherein:
the mixing appliance (11) further comprises an actuator (125) coupled to the shifter member (130), wherein the triggering (430) the shifter member (130) comprises one of selectively moving the actuator (125) to a first actuator position to drive the shifter member (130) to a first shifter position, or selectively moving the actuator (125) to a second actuator position to drive the shifter member (130) to a second shifter position; and/or
the actuator (125) is further configured to move from the first or second actuator position to the other of the first or second actuator position in response to an actuation signal and the selectively moving the actuator (125) includes providing the actuation signal from the controller module (30) to the actuator (125); and/or
the controller module (30) is configured to receive a first input signal from a user interface (20) and the providing the actuation signal to the actuator (125) is responsive to the first input signal; and/or
the method (400) further comprises selecting, by the controller module (30), a predefined operation from a memory (34) based on the first input signal and each predefined operation is defined by at least one of an engagement of the first gear train (141) for a first duration or an engagement of the second gear train (142) for a second duration; and/or
the providing the actuation signal to the actuator (125) is further based on the selected predefined operation and the selected predefined operation includes a sequence of operations, the sequence of operations being defined by at least one engagement of the first gear train (141) for a first duration and at least one engagement of the second gear train (142) for a second duration; and/or
the selecting, by the controller module (30), of the predefined operation includes selecting the sequence of operations and the providing an actuation signal to the actuator (125) is based on the selected sequence of operations.
